# EUROPÄISCHE PATENTSCHRIFT

(11) **EP 2 642 732 B1**
(45) Veröffentlichungstag und Bekanntmachung des Hinweises auf die Patenterteilung: **25.07.2018**
(21) Anmeldenummer: 13160289.8
(22) Anmeldetag: 21.03.2013
(51) Int. Cl.: H04M 1/23, H04M 1/725, G08B 25/01, G08B 25/12, H04B 1/00, H04M 1/02, H04W 76/00, H04B 1/38, H04M 1/03, H04W 88/02

(54) **Handmonophon**
Handheld monophone
Monophonie manuelle

(30) Priorität: 23.03.2012 DE 102012102542
(43) Veröffentlichungstag der Anmeldung: 25.09.2013
(73) Patentinhaber: Schmittschneider, Karl, 78262 Gailingen (DE)
(72) Erfinder: Schmittschneider, Karl, 78262 Gailingen (DE)
(74) Vertreter: Patentanwälte und Rechtsanwalt Weiß, Arat & Partner mbB

(56) Entgegenhaltungen:
- EP-A1- 1 004 957
- EP-A1- 1 592 213
- GB-A- 2 402 293
- US-A1- 2003 078 077
- US-A1- 2008 165 147

## Beschreibung

### Technisches Gebiet

Die Erfindung betrifft ein Handmonophon nach dem Oberbegriff des Anspruchs 1 sowie ein Verfahren nach dem Oberbegriff des Anspruchs 12.

### Stand der Technik

Aus dem Stand der Technik wird auf die EP 1 004 957 A1 verwiesen, welche eine mobile Terminaleinheit mit einem zentralen Bedienungsknopf offenbart. Weiter wird auf die EP 1 592 213 A1 hingewiesen, welche ein Funkgerät mit einem Aktuator aufweist.

Ausserdem zeigt die US 2003/0078077A1 ein klappbares Mobiltelefon, wobei eine Vielzahl von Funktionen über einen zentralen Betätigungsknopf gesteuert werden.

Zuletzt wird auf die GB 2 402 293 A und die US 2008/165147 A1 verwiesen, welche mobile Kommunikationsgeräte mit zentralen Bedienungsknöpfen zur Ansteuerung einer Vielzahl von Funktionen zeigen.

Die derzeit auf dem Markt erhältlichen Funkgeräte erfüllen ihre Aufgabe als Kommunikationsgeräte. Hierbei haben sie im Gegensatz zu Mobilfunkgeräte, wie Handys und Smartphones, in den letzten Jahren keine großen technischen Fortschritte zu verzeichnen. Die Technik hat sich hinsichtlich der Gesprächs- und Tonqualitäten geändert. Es können größere Reichweiten abgedeckt werden. Einige Funktionen, wie zum Beispiel der Akkumulatorstand, die Kanalwahl oder der Volumenstand können über moderne Displays angezeigt werden. Die Gestaltung, die Auslegung und das Design erfüllen Ansprüche, wie robustere Bauweisen und Abdichtungen gegen ein Eindringen von jeglichen Flüssigkeiten und/oder Staub und Verschmutzungen. Weitere Ausführungen weisen unter anderem auch eine Sprachsteuerung vor.

Funkgeräte sind keine Kommunikationsgeräte die ihre Verwendung im täglichen Gebrauch für Ottonormalbürger finden. Es sind zuverlässige Kommunikationsgeräte zum Beispiel auf Baustellen, bei der Polizei, dem Rettungsdienst, in Skigebieten, im Sport und in anderen Freizeitbereichen, wo keine alternative Netzverbindung eines Netzanbieters empfangen werden kann.

Aus diesen Einsatzbereichen kann ein Ersetzen und das Auslaufen der Funkgeräte derzeit nicht in Betracht gezogen werden. Dies spricht dafür, Funkgeräte in ihrer Effizienz und ihrer Funktionalität weiter zu verbessern.

Funkgeräte können dem Stand der Technik entsprechend gewisse Funktionen aufweisen. Diese Funktionen können vorteilhafterweise ihr Verwendungsspektrum erweitern. Darunter fällt zum Beispiel die Funktion des Notruf - Auslösens. Hierzu gibt es eine bekannte Ausführung, welche in der DE 198 59 025 A1 beschrieben ist. Des Weiteren ist das Nokia 8110i in der Lage, ohne eine eingesetzte Subscriber-Identity-Module Karte den Polizeinotruf zu alarmieren.

Es gibt viele Hersteller und viele Ausführungen, welche mit einigen der folgenden Funktionen ausgestattet sind, wie eine Sprachsteuerung, eine Freisprechfunktion, ein Umschalten zwischen den Gesprächsteilnehmern oder beispielsweise eine automatische Kanalsuche.

### Aufgabe der Erfindung

Aufgabe der Erfindung ist es ein Handmonophon zu schaffen, welches sich auf die persönlichen Ansprüche verschiedener Benutzer abstimmen lässt.

### Lösung der Aufgabe

Zur Lösung der Aufgabe führen die Merkmale der Ansprüche 1 und 9. In typischen Ausführungsbeispielen umfasst ein Handmonophon eine Multifunktionstaste. Vorzugsweise sind der Multifunktionstaste eine Vielzahl von Funktionen zugeordnet. Die Funktionen sind in einem vorprogrammierten Speicher hinterlegt, auf die die Multifunktionstaste zugreift. Einer programmierbaren Taste kann eine Funktion der Multifunktionstaste zugewiesen werden. Hierbei sind mindestens eine Taste, vorzugsweise eine zweite und eine dritte Taste vorhanden. In weiteren Ausführungsbeispielen sind Ausführungen mit mindestens einer vorzugsweise bis zu fünf Tasten gegeben. Diese programmierbaren Tasten sind in zwei Ebenen eingebunden. Die erste Ebene ist eine individuell programmierbare Ebene, in der zu den Tasten eine Standardfunktion zuweisbar ist. Diese Zuweisung erfolgt durch eine Tastenkombination. Der Vorteil zu diesen individuell programmierten Tasten ist ein Schnellzugriff und eine erleichterte Verwendung des Handmonophons, da zu den Tasten eine Zuweisung der meist bevorzugt genutzten Standardfunktionen erfolgt. Die zweite Ebene beinhaltet fest programmierte Standardfunktionen wie eine Modusfunktion, eine Lautstärkenerhöhung "+"- und eine Lautstärkenreduktion "-" - Funktion. Die Multifunktionstaste hat eine Drehrast- und Tastfunktion. Die Drehrastfunktion hat mindestens eine Einrastfunktion, vorzugsweise zwischen drei bis dreißig, besonders bevorzugt zehn bis fünfzehn. In dieser Ausführung sind bevorzugt elf Einrastungen vorgesehen, in denen jeweils eine Standard-funktion einprogrammiert ist.

Es sind vorzugsweise die folgenden Standardfunktionen hinterlegt:
1. Status, 2. SMS, 3. Daten, 4. Kanal, 5. Gruppen-/ Einzel-ruf, 5. Notruf, 6. direkt- und IDR- Mode, 7. Mute, 8. TX-PIP, 9. Lautstärke "+"/"-", 10. Volle digitale Audiosignalverarbeitung empfangen und 11. Volle digitale Audiosignalverarbeitung senden vorprogrammiert.

In weiteren Ausführungsbeispielen ist auch eine Aktualisierung und Ergänzung der Standardprogramme über einen Server möglich. Das bringt den Vorteil ein, dass Standardfunktionen bei Bedarf über Datenschnittstellen, vorzugsweise über eine USB - Schnittstelle, am Computer verändert werden können. Dies macht das Handmonophon hinsichtlich der Standardprogramme und deren Funktionen zeitlos.

Typscherweise umfasst das Handmonophon eine PTT-Taste. Diese PTT-Taste hat zu seiner Funktion "Push to Talk" eine weitere Funktion, in der diese Taste für eine bestimmte Tastenkombination verwendbar ist. Dies hat den Vorteil für das Handmonophon, das mit den vorhandenen Tasten die optimale Nutzung der Möglichkeiten gegeben ist.

Ferner umfasst das Handmonophon vorzugsweise eine "Multimedia Interaktiv Control - Low Signal" Klinkenbuchse. Dies hat den Vorteil, dass bei Verwendung mehrerer Handmonophone in einem Raum oder bei der Verwendung in lauter Umgebung durch das Anschließen eines Headsets, eine ungestörte Kommunikation gegeben ist.

In typischen Ausführungsbeispielen umfasst das Handmonophon eine Halteklammer auf der Rückseite. Diese Halteklammer soll ein Aufhängen des Handmonophons ermöglichen. Die Halteklammer wird vorzugsweise an dem Gürtel angebracht. Ebenso weisen mögliche Ausführungen eine Halteklammer an den Seiten auf. Diese Aufhängung über eine Halteklammer hat den Vorteil, dass man das Handmonophon immer dabei haben kann, ohne es in der Hand mitführen zu müssen.

In typischen Ausführungsbeispielen umfasst das Handmonophon bevorzugt ein Anschlusskabel mit einem 90° Stecker. Dies ist zum Einen platzsparend und zum Anderen ist eine Verbindungstrennung durch das Ziehen am Kabel nicht möglich. In weiteren Ausführungsbeispielen sind verschiedene Anschlussausführungen wie zum Beispiel ein gerader Stecker ebenfalls möglich.

In typischen Ausführungsbeispielen wird vorzugsweise die Zuweisung einer Standardfunktion zu einer Taste wie folgt ausgeführt:
- Gleichzeitiges Drücken der Multifunktionstaste und der Taste S1.
- Stellungswahl der Multifunktionstaste durch das Drehen des Drehrasters auf die gewünschte Position der Einrastung.
- Die ausgewählte Taste, der Tasten erste Taste bis dritte Taste, Betätigen und 10 Sekunden lang gedrückt halten, damit die gewünschte Standardfunktion in der Taste abgespeichert wird.

Diese Speicherung ist jederzeit veränderbar und hat somit den Vorteil, dass das Handmonophon von verschiedenen Benutzern individuell verwendet werden kann.

In typischen Ausführungsbeispielen wird vorzugsweise durch das Drücken der Tastenkombination der ersten Taste und der dritten Taste ein Notruf ausgelöst.

In typischen Ausführungsbeispielen wird vorzugsweise durch das Drücken der Tastenkombination der ersten Tasten und der zweiten Tasten ein Einzelruf beendet.

Ferner wird bevorzugt durch ein kurzes Drücken der Multifunktions-taste ein Anwählen der zweiten Ebene, der Tasten erste Taste bis dritte Taste, innerhalb von 3 Sekunden möglich. Falls innerhalb der 3 Sekunden keine der drei Tasten gedrückt wird, geht das Handmonophon bevorzugt in den Stummmodus über. Um aus dem Stummmodus wieder in den Normalmodus wechseln zu können, muss vorzugsweise die Multifunktionstaste gedrückt gehalten und dabei die PTT-Taste zwei mal gedrückt werden.

In typischen Ausführungsbeispielen ist die Zuweisung der Tastenkombinationen zu den gewünschten Funktionen über eine USB - Schnittstelle am Computer frei belegbar.

### Figurenbeschreibung

Weitere Vorteile, Merkmale und Einzelheiten der Erfindung ergeben sich aus der nachfolgenden Beschreibung bevorzugter Ausführungsbeispiele sowie Anhand der Zeichnung; diese zeigt in
Figur 1 eine schematische Vorderansicht eines erfindungsgemäßen Handmonophons;
Figur 2 eine schematische Seitenansicht eines erfindungsgemäßen Handmonophons.

### Ausführungsbeispiel

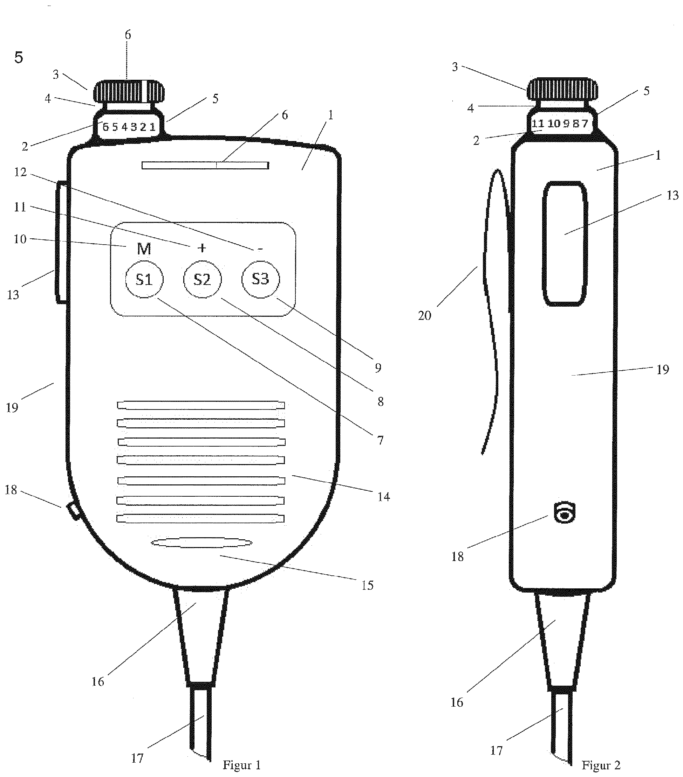

Figur 1 zeigt eine Vorderansicht eines erfindungsgemäßen Handmonophons 1. Das Gehäuse des Handmonophons 1 weist eine Rechteckform mit abgerundeten Enden unterhalb und oberhalb auf. Am oberen Ende ist das Handmonophon mit einem sehr großen Radius versehen und am unteren Ende ist ein Radius, gemäß der halben Gehäusebreite, gegeben. Auf der oberen abgerundeten Kante des Handmonophons befindet sich eine Multifunktionstaste 2. Diese ist zylindrisch und dreiteilig aufgebaut. Außerdem ist ein Drehrastschalter 3 mit einer umlaufenden Rändelung und einer Einkerbung mit einem weißen Innenstrich gezeigt. Daneben ist eine Führung 4 für die Tastbetätigung mit einem geringeren Durchmesser vorhanden. Auf der dem Drehrastschalter 3 abgewandten Seite der Führung 4 ist eine Programmfunktion 5 gezeigt. Die Führung 4 für Tastbetätigung und die Programmfunktion 5 sind eine Ausformung aus dem Gehäuse des Handmonophons 1. Der Durchmesser der Programmfunktion 5 ist größer als der der Führung 4. Auf der Mantelfläche der Programmfunktion 5 sind Ziffern von "1" bis "11" signiert, wie in den Figuren 1 und 2 zu erkennen ist.

Zum oberen Ende hin ist ein Lichtkanal 21 mit zwei Aufteilungen vorhanden. Darunter ist ein versenkter Bereich mit drei Tasten 7, 8, 9 und drei Inschriften 10, 11, 12 gezeigt. Auf den Tasten 7, 8 ,9 sind von links nach rechts S1, S2 und S3 signiert. Über den Tasten 7, 8 9 sind die Inschriften 10, 11, 12 von links nach rechts verlaufend mit "M", "+", und "-" in das Gehäuse eingeprägt. Unter dem versenkten Bereich für die Tasten 7, 8, 9 und den Inschriften 10, 11, 12 sind Längsöffnungen 14 für den Lautsprecher vorhanden, welche nach unten mit einer kleinen Öffnung 15 für das Mikrofon abgeschlossen sind. Außerdem ist ein Anschlusskabel 17 gezeigt, das über einen Kabelschutz 16, welcher die Form eines Kegelstumpfes hat, ummantelt wird. Linksseitig am unteren Radius ist ein "Multimedia Interaktiv Control - Low Signal" Anschluss 18 gegeben. Linksseitig im oberen Bereich des Handmonophons 1 ist die Push - to - Talk Taste 13 integriert. Etwas unterhalb der Push - to - Talk Taste 13 befindet sich eine USB Schnittstelle 19.

Figur 2 ist eine Seitenansicht von links von einem erfindungsgemäßen Handmonophon nach Figur 1. Dort ist neben den bereits in Figur1 beschriebenen Merkmalen ausserdem eine Halteklammer 20 gezeigt. Auf die einzelnen in Figur 1 eingegangenen Merkmale, welche sich in Figur 2 lediglich wiederholen, wird nicht nochmals eingegangen. Es wird darauf hingewiesen, dass die zu den einzelnen Merkmalen in Figur 1 gemachten Ausführungen auch für die Figur 2 gelten sollen. Dies insbesondere dann, wenn die gleichen Merkmale mit den gleichen Bezugsziffern versehen wurden.

**Bezugszeichenliste**

| | | | | | |
|---|---|---|---|---|---|
| 1 | Handmonophon | 34 | | 67 | |
| 2 | Multifunktionsschalter | 35 | | 68 | |
| 3 | Drehrastschalter | 36 | | 69 | |
| 4 | Führung für Tastbetätigung | 37 | | 70 | |
| 5 | Programmfunktionen | 38 | | 71 | |
| 6 | Taster | 39 | | 72 | |
| 7 | 1. Taste S1 | 40 | | 73 | |
| 8 | 2. S2 | 41 | | 74 | |
| 9 | 3. Taste S3 | 42 | | 75 | |
| 10 | Ebene 2, 1. Taste S1 Modus M | 43 | | 76 | |
| 11 | Ebene 2, 2. Taste S2 Volumen + | 44 | | 77 | |
| 12 | Ebene 2, 3. Taste S3 Volumen - | 45 | | 78 | |
| 13 | PTT-Taste | 46 | | 79 | |
| 14 | Lautsprecheröffnung | 47 | | | |
| 15 | Mikrofonöffnung | 48 | | | |
| 16 | Kabelschutz | 49 | | | |
| 17 | Anschlusskabel | 50 | | | |
| 18 | MIC - LS - Klinkenbuchse | 51 | | | |
| 19 | USB - Schnittstelle | 52 | | | |
| 20 | Halteklammer | 53 | | | |
| 21 | Lichtkanal | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Handmonophon (1) zur Verbindung mit einem Funkgerät mit einer Multifunktionstaste (2), geeignet zum Auswählen einer Mehrzahl von Funktionen, wobei eine erste programmierbare Taste (7), eine zweite programmierbare Taste (8) und eine dritte programmierbare Taste (9), vorhanden sind,
**dadurch gekennzeichnet, dass**
der ersten programmierbaren Taste (7), der zweiten programmierbaren Taste (8) und der dritte programmierbare Taste (9), eine Funktion der Multifunktionstaste (2) zuweisbar ist, wobei die Multifunktionstaste (2) zylindrisch und dreiteilig aufgebaut ist und sich dabei auf der oberen abgerundeten Kante des Handmonophons (1) befindet und aus einem Drehrastschalter (3) mit einer umlaufenden Rändelung und einer Einkerbung, einer Führung (4) für die Tastbetätigung des Drehrastschalters (3) mit einem geringeren Durchmesser als der Drehrastschalter (3), wobei auf der dem Drehrastschalter (3) abgewandten Seite der Führung (4) sich eine Anzeige für eine Programmfunktion (5) befindet, wobei die Führung (4) für Tastbetätigung und die Anzeige der Programmfunktion (5) eine Ausformung aus dem Gehäuse des Handmonophons (1) sind, wobei ein Speicher umfasst ist, der geeignet ist eine vorprogrammierte Funktion zu speichern und wobei ein Anschlusskabel (17) umfasst ist, um eine Verbindung mit einem Funkgerät herzustellen.

2. Handmonophon (1) nach den vorherigen Ansprüchen, **dadurch gekennzeichnet, dass** die Multifunktionstaste (2) geeignet ist, das Handmonophon (1) in einen Programmiermodus zu schalten.

3. Handmonophon (1) nach einem der vorherigen Ansprüche, **gekennzeichnet durch** mindestens eine Schnittstelle (19).

4. Handmonophon (1) nach einem der vorherigen Ansprüche, **dadurch gekennzeichnet, dass** das Handmonophon (1) eine Push-to-Talk - Taste (13) aufweist.

5. Handmonophon (1) nach den vorherigen Ansprüchen, **gekennzeichnet durch** eine Halteklammer (20).

6. Handmonophon (1) nach einem der vorigen Ansprüche, **dadurch gekennzeichnet, dass** die erste programmierbare Taste (7) und die dritte programmierbare Taste (9) geeignet sind, bei gleichzeitigem Bestätigen einen Notruf auszulösen.

7. Handmonophon (1) nach einem der vorigen Ansprüche, **dadurch gekennzeichnet, dass** die erste programmierbare Taste (7) und die zweite programmierbare Taste (8) geeignet sind, bei gleichzeitigem Bestätigen einen Einzelruf zu beenden.

8. Handmonophon (1) nach den vorherigen Ansprüchen, **dadurch gekennzeichnet, dass** die erste programmierbare Taste (7) in der Tastenkombination mit der Multifunktionstaste (2) eine Modustaste ist.

9. Verfahren zur Bedienung eines Handmonophons (1) nach einem der Ansprüche 1 bis 9, **gekennzeichnet durch** die Schritte:
a) Wählen eines Speichermodus;
b) Wählen einer Funktion, mit der eine programmierbare Taste (7, 8, 9) belegt werden soll;
c) Wählen der zum programmieren vorgesehenen Taste (7, 8, 9), die mit der Funktion belegt werden soll.

10. Verfahren nach Anspruch 9, **dadurch gekennzeichnet, dass** zum Wählen des Speichermodus die Multifunktionstaste (2) betätigt wird und innerhalb einer Zeitspanne eine Modustaste (7) betätigt wird.

11. Verfahren nach Anspruch 9 oder 10, **dadurch gekennzeichnet, dass** zum Wählen einer Funktion mit der eine programmierbare Taste (7, 8, 9) belegt werden soll, die Multifunktionstaste (2) auf eine Position gestellt wird, in der die gewünschte Funktion hinterlegt ist.

12. Verfahren nach einem der Ansprüche 9 bis 11, **dadurch gekennzeichnet, dass** zum Wählen der programmierbaren Taste (7, 8, 9), die mit der Funktion belegt werden soll, die jeweilige Taste (7, 8, 9) gedrückt wird.

## Claims

1. Handheld monophone (1) for connection to a radio device, having a multifunction button (2) suitable for selecting a plurality of functions, wherein a first programmable button (7), a second programmable button (8) and a third programmable button (9) are present, **characterized in that** a function of the multifunction button (2) can be assigned to the first programmable button (7), to the second programmable button (8) and to the third programmable button (9), wherein the multifunction button (2) is cylindrical and constructed in three parts and is located on the top rounded edge of the handheld monophone (1) and of a rotary latching switch (3) with a circumferential knurling and an indentation, a guide (4) for touch actuation of the rotary latching switch (3) having a smaller diameter than the rotary latching switch (3), wherein an indicator for a program function (5) is located on the side of the guide (4) remote from the rotary latching switch (3), wherein the guide (4) for touch actuation and the indicator of the program function (5) are a shaping of the housing of the handheld monophone (1), wherein a memory is included which is suitable for storing a pre-programmed function, and wherein a connection cable (17) is included for establishing a connection to a radio device.

2. Handheld monophone (1) according to the preceding claims, **characterized in that** the multifunction button (2) is suitable for switching the handheld monophone (1) into a programming mode.

3. Handheld monophone (1) according to one of the preceding claims, **characterized by** at least one interface (19).

4. Handheld monophone (1) according to one of the preceding claims, **characterized in that** the handheld monophone (1) has a push-to-talk button (13).

5. Handheld monophone (1) according to the preceding claims, **characterized by** a retaining clip (20).

6. Handheld monophone (1) according to one of the preceding claims, **characterized in that** the first programmable button (7) and the third programmable button (9) are suitable for triggering an emergency call when actuated simultaneously.

7. Handheld monophone (1) according to one of the preceding claims, **characterized in that** the first programmable button (7) and the second programmable button (8) are suitable for ending an individual call when actuated simultaneously.

8. Handheld monophone (1) according to the preceding claims, **characterized in that** the first programmable button (7), in the button combination with the multifunction button (2), is a mode button.

9. Method for operating a handheld monophone (1) according to one of claims 1 to 9, **characterized by** the steps:
a) selecting a save mode;
b) selecting a function for which a programmable button (7, 8, 9) is to be used;
c) selecting the button (7, 8, 9) for programming that is to be used for the function.

10. Method according to claim 9, **characterized in that**, in order to select the save mode, the multifunction button (2) is actuated and a mode button (7) is actuated within a period of time.

11. Method according to claim 9 or 10, **characterized in that**, in order to select a function for which a programmable button (7, 8, 9) is to be used, the multifunction button (2) is set to a position in which the desired function is stored.

12. Method according to one of claims 9 to 11, **characterized in that**, in order to select the programmable button (7, 8, 9) that is to be used for the function, the respective button (7, 8, 9) is pressed.

## Revendications

1. Monophone manuel (1) pour la connexion à un appareil radio avec une touche multifonction (2) apte à sélectionner une pluralité de fonctions, dans lequel sont présentes une première touche programmable (7), une deuxième touche programmable (8) et une troisième touche programmable (9),
**caractérisé par le fait que**
à la première touche programmable (7), à la deuxième touche programmable (8) et à la troisième touche programmable (9) peut être attribuée une fonction de la touche multifonction (2), la touche multifonction (2) étant construite de manière cylindrique et en trois parties et se trouvant sur le bord arrondi supérieur du monophone manuel (1) et consistant en un interrupteur d'arrêt rotatif (3) avec un moletage périphérique et une encoche, un guide (4) pour l'actionnement tactile de l'interrupteur d'arrêt rotatif (3) d'un diamètre inférieur à celui du commutateur de verrouillage de rotation (3), dans lequel du côté du guide (4) opposé à l'interrupteur d'arrêt rotatif (3) se trouve un affichage d'une fonction de programme (5), le guide (4) pour l'actionnement tactile et l'affichage de la fonction de programme (5) étant un évidement formé dans le boîtier du monophone manuel (1), dans lequel est incluse une mémoire apte à mémoriser une fonction préprogrammée et dans lequel est inclus un câble de connexion (17) pour établir une connexion avec un appareil radio.

2. Monophone manuel (1) selon les revendications précédentes, **caractérisé par le fait que** la touche multifonction (2) est apte à commuter le monophone manuel (1) en un mode de programmation.

3. Monophone manuel (1) selon l'une des revendications précédentes, **caractérisé par** au moins une interface (19).

4. Monophone manuel (1) selon l'une des revendications précédentes, **caractérisé par le fait que** le monophone manuel (1) présente une touche Push-to-Talk (13).

5. Monophone manuel (1) selon les revendications précédentes, **caractérisé par** un clip de retenue (20).

6. Monophone manuel (1) selon l'une des revendications précédentes, **caractérisé par le fait que** la première touche programmable (7) et la troisième touche programmable (9) sont aptes à déclencher un appel de secours en cas d'actionnement simultané.

7. Monophone manuel (1) selon l'une des revendications précédentes, **caractérisé par le fait que** la première touche programmable (7) et la deuxième touche programmable (8) sont aptes à terminer un appel unique en cas d'actionnement simultané.

8. Monophone manuel (1) selon les revendications précédentes, **caractérisé par le fait que** la première touche programmable (7) est, dans la combinaison de touches avec la touche multifonction (2), une touche de mode.

9. Procédé pour faire fonctionner un monophone manuel (1) selon l'une quelconque des revendications 1 à 9, **caractérisé par** les étapes consistant à:
a) sélectionner un mode de mémorisation;
b) sélectionner une fonction à attribuer à une touche programmable (7, 8, 9);
(c) sélectionner la touche prévue pour la programmation (7, 8, 9) à laquelle doit être attribuée la fonction.

10. Procédé selon la revendication 9, **caractérisé par le fait que** pour la sélection du mode de mémorisation, on actionne la touche multifonction (2) et dans l'intervalle d'un laps de temps, on actionne une touche de mode (7).

11. Procédé selon la revendication 9 ou 10, **caractérisé par le fait que** pour sélectionner une fonction qui doit être attribuée à une touche programmable (7, 8, 9), on place la touche multifonction (2) dans une position dans laquelle se trouve la fonction souhaitée.

12. Procédé selon l'une quelconque des revendications 9 à 11, **caractérisé par le fait que** pour sélectionner la touche programmable (7, 8, 9) à laquelle doit être attribuée la fonction, on appuie sur la touche respective (7, 8, 9).
